# EUROPEAN PATENT SPECIFICATION

(11) **EP 2 066 893 B1**
(45) Date of publication and mention of the grant of the patent: **11.06.2014**
(21) Application number: 07808816.8
(22) Date of filing: 14.09.2007
(51) Int. Cl.: F02D 41/02, F01N 3/023, F01N 9/00

(54) **LIMITING TRANSMISSION FUNCTION WHILE IN REGENERATION MODE FOR A DIESEL PARTICULATE FILTER**
BEGRENZUNG DER ÜBERTRAGUNGSFUNKTION IN EINEM REGENERATIONSMODUS FÜR EINEN DIESELTEILCHENFILTER
LIMITATION D'UNE FONCTION DE TRANSMISSION EN MODE DE RÉGÉNÉRATION POUR UN FILTRE À PARTICULES DIESEL

(30) Priority: 15.09.2006 US 825869 P
(43) Date of publication of application: 10.06.2009
(73) Proprietor: Volvo Lastvagnar AB, 405 08 Göteborg (SE)
(72) Inventor: SAHLEN, Ivar, 430 90 Öckerö (SE); TOBIASSON, Mats Henrik, 417 27 Göteborg (SE)
(74) Representative: Fröhling, Werner Otto
(86) International application number: PCT/SE2007/000806
(87) International publication number: WO 2008/033082

(56) References cited:
- EP-A1- 1 384 876
- EP-A1- 1 437 492
- WO-A1-2004/088100
- JP-A- 10 073 018
- JP-A- 2005 155 532
- US-A1- 2004 020 194
- US-A1- 2004 044 457
- US-A1- 2005 050 883

## Description

### FIELD OF THE INVENTION

The present invention generally relates to adapting a control strategy for an automatic mechanical transmission in order to maintain proper operating conditions of after-treatment systems.

### BACKGROUND OF THE INVENTION

Heavy commercial vehicles such as overland trucks and buses are known to employ automatic mechanical transmissions that are based on programmed routines. Additionally, various types of emission control devices have been recently implemented on heavy vehicles to reduce the emissions from the vehicle's engine to the atmosphere including diesel particulate filters, catalytic converters, and NOx reduction devices. One example of the diesel particulate filter is the DPF ( Diesel Particulate Filter) type, a filter in which the selected particulates can be trapped, but also is arranged to be able to bum off the particulates to clean the filter. While a vehicle is operated with a DPF, particles accumulate in the filter over time and can clog the filter and thus prevent proper operation and allow increased emissions. Furthermore, plugging of the filter results in an increase in the exhaust back pressure in the exhaust system so that the engine must generate an unnecessary amount of energy to drive normally, thus increasing fuel consumption. With an automatic mechanical transmission, the gears are selected and shifted using specially designed routines.

According to the closest prior art document WO 2004/088100, adjustment of the transmission gear selection is described in order to control the temperature of the DPF type filter to within a predetermined temperature range. By controlling the temperature of the filter, the particles that have built up in the filter can be burned off. This allows for extension of life of the filter as well as continued reduction in emissions by the system.

The present invention is concerned with enabling control over operating temperatures within a diesel particulate filter as well as other aftertreatment systems by controlling the transmission and engine to ensure these systems are at proper operating conditions.

### SUMMARY OF THE INVENTION

In at least one embodiment, the presently disclosed invention takes the form of a method for regenerating a DPF type filter in the exhaust system of an internal combustion engine (ICE) driven vehicle that is equipped with a automatic mechanical transmission (AMT). The method comprising the features of claim 1.

In a related, but different embodiment, the invention takes the form of a system for regenerating a DPF type filter in the exhaust system of an internal combustion engine (ICE) driven vehicle equipped with an automatic mechanical transmission (AMT). The system comprising the features of claim 7.

### BRIEF DESCRIPTION OF THE DRAWINGS

The accompanying drawings variously illustrate aspects of the presently disclosed inventions. It should be appreciated that the illustrated embodiments are exemplary only, and do not serve as limitations to the protection. The drawings do, however, constitute part of the disclosure of the specification, and thereby contribute to, and provide support for the patented inventions. In the figures:
FIG. 1 is a schematic representation of a vehicle equipped with an internal combustion engine, automatic mechanical transmission and emission control device;
FIG. 2 is a flow chart illustrating a control routine for determining when regeneration of a DPF should occur;
FIG. 3 is an apparatus used according to one embodiment of the invention.

### DETAILED DESCRIPTION OF THE INVENTION

The presently disclosed invention relates to modifying the gear selection of the AMT so that it accommodates the gear selection chosen by the AMT to effectuate proper control in an aftertreatment system.

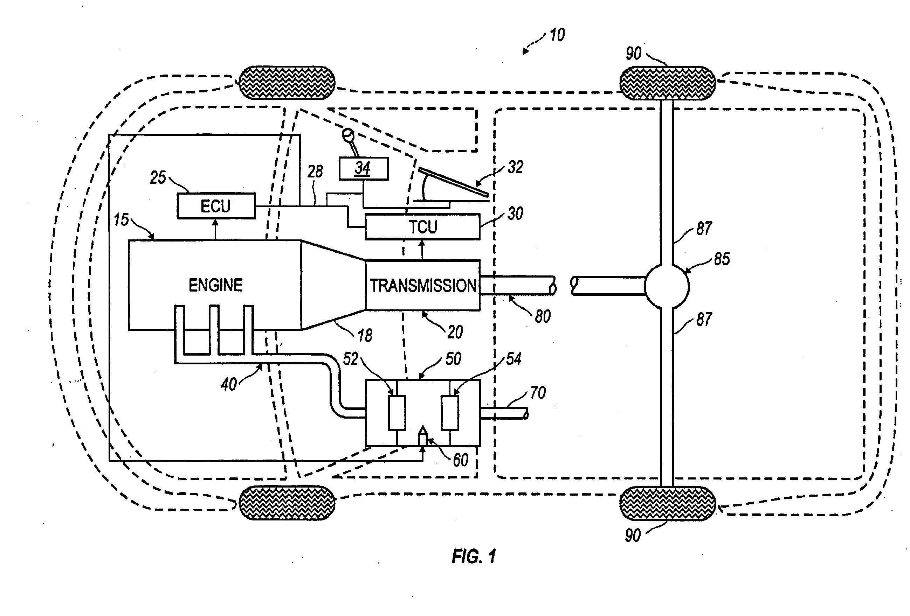

In at least one embodiment and as generally illustrated in FIG. 1, the invention takes the form of a heavy vehicle 10 powered by an internal combustion engine 15. The internal combustion engine 15 is coupled to transmission 20 via a clutch 18. Preferably, this clutch 18 is a friction clutch 18 that can be automated in order to control engagement or disengagement of the transmission 20. The transmission 20 is connected to the drivewheels 90 of the vehicle 10 by a driveshaft 80, differential gear 85, and rear axles 87.

In one embodiment, the aftertreatment system is an emission control device 50 which is connected to the engine 15 through a first exhaust pipe 40. Other devices maybe mounted on the exhaust pipe 40 between the engine 15 and emission control device 50. Typically, the emission control device 50 has a device as an oxidation catalyst or a Burner device 52 and a filter 54. The cleaned exhaust along with any remaining impurities exits the vehicle through a second exhaust pipe 70. The housing of the emission control device 50 can consist of stainless steel. Preferably, an oxidation catalyst or a Burner device 52 is installed ahead of the filter 54. The oxidation catalyst or a Burner device 52 in one embodiment is an oxidation catalytic converter with open channels in which the chemical reactions take place or a Burner device. After the desired chemical reactions take place, a DPF 54, preferably of the DPF type, is installed. The exhaust gases and exhaust particulate matter are forced to pass through the filter 54. The filter 54 serves as a trap which prevents particles from exiting the exhaust system through the second exhaust pipe 70.

An engine control unit 25 is adapted for controlling the engine 15 and is connected to a transmission control unit 30, adapted for controlling the transmission 20, via a data bus 28. While the description herein makes reference to a specific controller, the various control commands may be implemented on one or the other control unit. Furthermore, it is possible to combine both the engine control unit 25 and transmission control unit 30 into a single control unit. Additionally, it is further possible to have the engine control unit 25 and transmission control unit 30 made up of several control units, such as gear shifting control unit and gear selection control unit replacing the transmission control unit 30 and communicating therebetween. An accelerator pedal 32 and a gear selector 34 are further provided to allow the driver to control the engine control unit 25 as well as the transmission control unit 30. The gear selector 34 preferably has positions for manual shifting, automatic shifting, low gears, and reverse. Other gear selections are also considered within the scope of this disclosure and the above are given as examples of possible gear selections.

Generally, the sensors and other detectors mounted on the vehicle that need to communicate with either the transmission controller 30 or engine controller 25 are connected to the data bus 28. This allows for the information to be shared between the controllers 25, 30. In some embodiments a specialized bus controller may be implemented to manage the data sharing as well as serve as a receiving point for the information from the sensors. A temperature detector 60, one of such sensors, is shown in the diagram. It is used to communicate the temperature inside of the emission control device 50 back to the controllers 25, 30.

In order to determine the degree of plugging in the DPF 54, an estimate is produced using information available over the data bus 28. The estimate can be produced by an estimator in either the transmission controller 30 or engine controller 25 or a specially designed controller. In the case of a specially designed controller, the information is sent to the respective controlling requiring the information. The estimation is based upon trip data which can include the amount of fuel consumed, instantaneous engine load, and temperature of the DPF 54 measured by the temperature detector 60. Using this information, it is possible to produce an estimate of the plugging of the DPF 54 or a degree of plugging of the DPF 54. Furthermore, this value may be instead a qualitative value indicating that the plugging is estimated to be significant enough to warrant corrective measures to be implemented by the appropriate control unit(s). The data bus 28 is also capable of communicating the instantaneous parameters of engine torque, exhaust temperature, engine power, vehicle acceleration, exhaust backpressure, fuel consumption, injection timing, EGR valve position and Needle Opening Pressure. These parameters can be used in computing the degree of plugging of the DPF 54.

Often the particulate matter that is collected during operation of the engine 15 by the DPF 54 can be packed into uneven places and cavities further leading to blocking conditions. Under the appropriate temperature conditions, these particles can react with oxygen. Thus, it is possible to cause this reaction by raising the temperature of the emission control device 50 to an appropriate temperature. This reaction is typically called regeneration or "burning clean" the filter. This procedure is an oxidation process.

Using the engine control unit and the transmission control unit, it is possible to obtain a desired operating temperature. Under normal driving conditions, the emission control device 50 is below the temperature required to regenerate the DPF. Thus a specially designed routine is required to raise the temperature of the emission control device 50 to what is required to clean the device 50. Typical temperatures for cleaning the device 50 can be on the order of 350 C to 650C. The temperature required for other aftertreatment systems can be within this range or another as determined by the particular aftertreatment system. While some regeneration systems use specialized operation of the engine 15 to produce these temperatures, it is desirable to implement these routines in regular driving patterns in order to reduce engine run time as well as provide for a more efficient process to reach these temperatures.

The degree of plugging of the filter 54 is a determining factor used for deciding when an appropriate control routine is required to raise the temperature of the emission control device 50. This can be done through a qualitative estimate of the number of particles that are likely to be present in the emission control device 50. This can be evaluated on all particles present or specific particles that are analyzed using the data available. If the later is used, a table may be implemented to store a value representative of the number of particles that are in the emission control device 50. These values are then used in computing the degree of plugging present in the emission control device 50.

Once the degree of plugging is determined to be over a predetermined amount, then a specialized control routine is implemented in order to cause regeneration in the emission control device 50. A qualitative optimization is performed to select a proper gear ratio in the transmission 20 in order to produce the desired temperature change in the exhaust system in order to cause regeneration. The optimization can be achieved by coordination with a gear selection in the transmission control unit 30. The optimization can be based on a number of different parameters such as gear ratio of the drive train and the period of time the gear ratio will be engaged. Thus, the regeneration of the emission device 50 is controlled in respect to the length of time of regeneration as well as the desired result when regeneration is complete. If the predetermined value has not been exceeded then no specialized control routine is implemented.

In order to allow continued efficient operation of the engine 15 and transmission 20, the time at which the regeneration is performed must be evaluated. Under certain circumstances, it is desirable to delay the regeneration. One example of a situation where regeneration should preferably be postponed can be when the vehicle 10 is on its way up a hill because raising the temperature of the emission control device 50 would require that an upshift be implemented. However, implementing an upshift at this point would be undesireable since the engine 15 would be forced to operate at a low engine speed and thus be incapable of producing the power required to climb the hill. If the regeneration is not started immediately, the routine returns to the state where the estimator acquires the data from the data bus 28 for computing when it should initiate such regeneration.

Furthermore, certain features of the transmission gear selection and shifting strategies must be modified temporarily in order to allow for regeneration to occur. In order to increase efficiency, a free-wheel mode may be enabled in the transmission routines such that in appropriate circumstances the vehicle 10 is allowed to roll without being impeded by engine resistance. The details of a free-wheeling routine are described in further detail in U.S. Application 10/709,384 filed April 30, 2004 (corresponding to WO03/037672) specifically in paragraphs 20-89 which are specifically incorporated herein by reference. As stated therein, the free-wheeling function is useful to effectuate a more fuel efficient operation of the engine 15 compared to operation of the engine 15 without the free-wheel function. Other examples of free-wheeling mode are described in U.S. Patent 6,869,377, WO 02/092378, WO 03/037672 and WO 2005/084995, all of which are expressly incorporated by reference in their entirety. Some examples of situations in which freewheeling might be useful include a slight to moderate downslope and when the vehicle 10 is slowing but neither the service brakes nor the auxiliary brakes of the vehicle 10 are applied. The free-wheeling function can be obtained by disengaging a synchronized split gear or disengaging a synchronized gear where there is no split gear in the gearbox. The controller deciding to engage a free-wheel function preferably receives signals from the gear shifter 34, accelerator pedal depression sensor 32, auxiliary brake control, brake pedal position sensor and cruise control module. If the conditions of the preprogrammed routine are met, then the free-wheel function is engaged.

If this free-wheeling function was activated during regeneration, the resistance to the engine 15 would be diminished because there would be no resistance coming from the drive train of the vehicle 10. Furthermore, the free-wheeling function of the transmission 20 causes the engine 15 to operate at substantially an idle state. While this may allow the temperature of the emission control device 50 to reach the desired operating temperature, the stability of this temperature over a period of time is difficult to maintain and furthermore due to the reduced flow of exhaust gases over the surfaces of the catalytic converter 52 and DPF 54, fractures in the surfaces may occur.

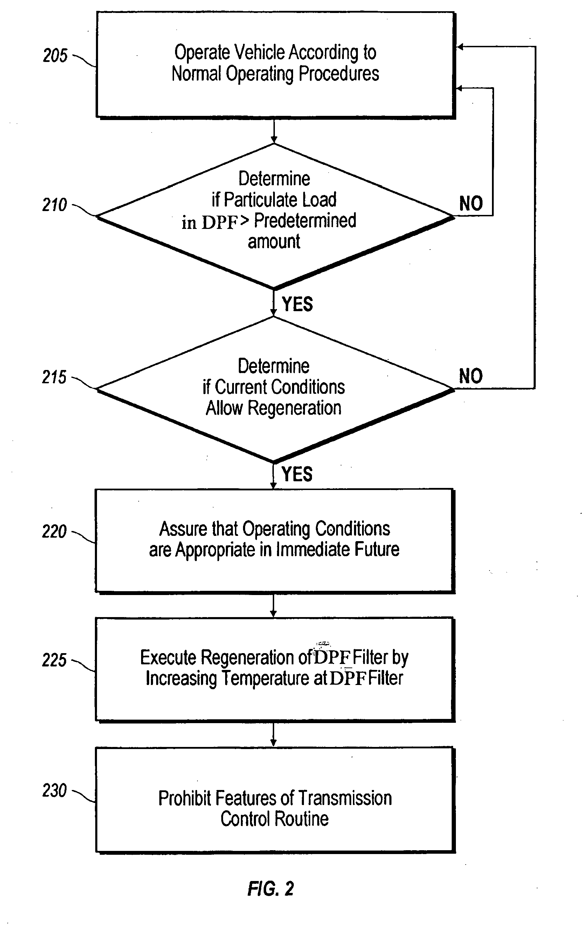

In at least one embodiment, as shown in FIG. 2, the presently disclosed invention takes the form of a method for regenerating a DPF type filter 54 in the exhaust system of an internal combustion engine (ICE) 15 driven vehicle 10 that is equipped with an automatic mechanical transmission (AMT) 20. The method includes determining that the particulate load in the DPF filter 54 exceeds a minimum predetermined threshold amount which is sufficiently high to warrant regeneration of the filter 54 (block 210), while the vehicle 10 is operated according to normal operating procedures (block 205). It further includes determining that current vehicle conditions exist which permit the establishment of appropriate conditions in the exhaust system to affect regeneration of the particulate loaded filter 54 by appropriately configuring the AMT 20 (block 215). The immediate future driving conditions are analyzed to assure they permit operation of the ICE 15 under sufficient load and at sufficiently low speeds to maintain a sufficient regeneration temperature and exhaust flow in the exhaust system under the control of the AMT 20 to affect regeneration of the DPF 54 (block 220). Finally, successful regeneration of the filter 54 is executed by appropriately configuring the AMT 20 to cause the ICE 15 to run in a manner that establishes a sufficient regeneration temperature and exhaust flow in the exhaust system and that is maintained for a prescribed period of time (block 225). Additionally, the method can prohibit certain features of the transmission control routine (block 230).

Several optional criteria are also prescribed. One is preventing configuration of the AMT 20 during regeneration execution that significantly reduces the running speed of the ICE 15. Another is preventing disengagement of the AMT 20 from the ICE 15 during regeneration execution. Another still is preventing configuration of the AMT 20 during regeneration execution that significantly reduces the load on the ICE 15. Yet another is preventing implementation of cruise control during regeneration execution. Still further, another is preventing implementation of a free-wheeling feature of the AMT 20 during regeneration execution.

In one variation or development, the method further includes additionally determining that the particulate load in the DPF filter 54 exceeds a maximum predetermined threshold amount which requires immediate regeneration of the filter 54 and then executing immediate regeneration of the filter 54 by appropriately configuring the AMT 20 to cause the ICE 15 to run in a manner that establishes a sufficient regeneration temperature and exhaust flow in the exhaust system for a prescribed period of time to accomplish the regeneration.

In a related manner, the method can also include determining that the particulate load in the DPF filter 54 exceeds a maximum predetermined threshold amount which requires immediate regeneration of the filter 54 and executing immediate regeneration of the filter 54 by increasing fuel being supplied to at least one of the ICE 15 and the exhaust system and which establishes a sufficient regeneration temperature and exhaust flow in the exhaust system for a prescribed period of time to accomplish the regeneration.

In summation, one of the over-all goals of the method is to potentiate the fuel economy of the vehicle 10 with respect to regeneration by effecting a majority of regeneration procedures without necessitating the establishment of engine conditions that raise fuel consumption beyond that required to power the vehicle 10.

In a related, but different embodiment, the invention takes the form of a system for regenerating a DPF type filter 54 in the exhaust system of an ICE 15 driven vehicle equipped with an AMT 20. The system includes a microprocessor based controller configured to process vehicle information and produce control instructions for at least the AMT 20 of the vehicle 15, the controller being in control-communication with the AMT 20 of the vehicle 10 and programmed as follows: to determine when the particulate load in the DPF type filter 54 exceeds a minimum predetermined threshold amount which is sufficiently high to warrant regeneration of the filter 54; to determine when current vehicle conditions exist which permit the establishment of appropriate conditions in the exhaust system to affect regeneration of the particulate loaded filter 54 by appropriately configuring the AMT 20; to assure that immediate future driving conditions permit operation of the ICE 15 under sufficient load and at sufficiently low speeds to maintain a sufficient regeneration temperature and exhaust flow in the exhaust system under the control of the AMT 20 to affect regeneration of the DPF 54; and to execute successful regeneration of the DPF by appropriately configuring the AMT 20 to cause the ICE 15 to run in a manner that establishes a sufficient regeneration temperature and exhaust flow in the exhaust system and that is maintained for a prescribed period of time.

As before, optional features include: (1) the controller being further programmed to prevent configuration of the AMT 20 during regeneration execution that significantly reduces the running speed of the ICE 15; (2) the controller being further programmed to prevent disengagement of the AMT 20 from the ICE 15 during regeneration execution; (3) the controller being further programmed to prevent configuration of the AMT 20 during regeneration execution that significantly reduces the load on the ICE 15; (4) the controller being further programmed to prevent implementation of cruise control during regeneration execution; and (5) the controller being further programmed to prevent implementation of a free-wheeling feature of the AMT 20 during regeneration execution.

As a further option, the controller can be further programmed to determine that the particulate load in the DPF 54 exceeds a maximum predetermined threshold amount which requires immediate regeneration of the filter 54 and to execute immediate regeneration of the filter by appropriately configuring the AMT 20 to cause the ICE 15 to run in a manner that establishes a sufficient regeneration temperature and exhaust flow in the exhaust system for a prescribed period of time to accomplish the regeneration.

As still a further option, the controller can be programmed to determine that the particulate load in the DPF 54 exceeds a maximum predetermined threshold amount which requires immediate regeneration of the filter 54 and to execute immediate regeneration of the filter 54 by increasing the fuel being supplied to at least one of the ICE 15 and the exhaust system and which establishes a sufficient regeneration temperature and exhaust flow in the exhaust system for a prescribed period of time to accomplish the regeneration.

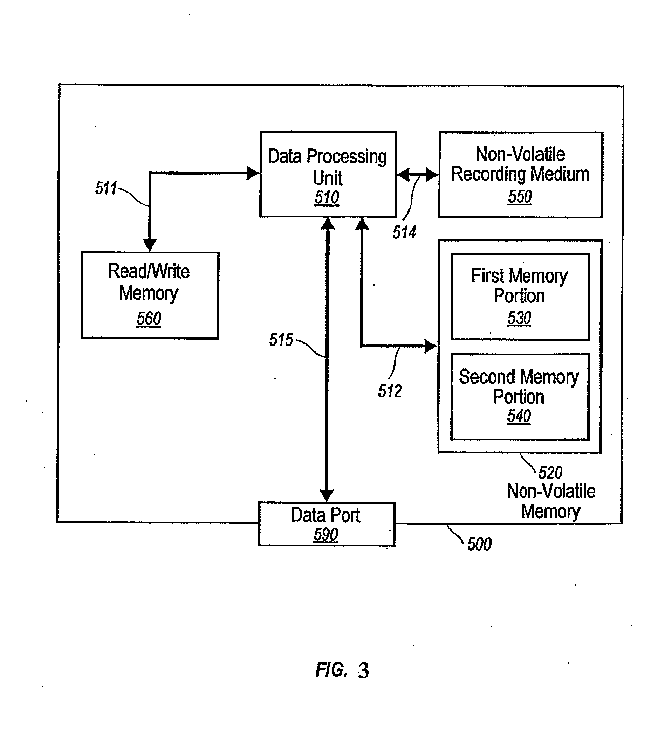

FIG. 3 shows an apparatus 500 according to one aspect of the invention, comprising a non-volatile memory 520, a processor 510 and a read and write memory 560. The memory 520 has a first memory portion 530 in which a computer program for controlling the apparatus 500 is stored. The computer program in the memory portion 530 for controlling the apparatus 500 can be an operating system. The apparatus 500 can be enclosed for example in a control unit, such as the transmission control unit 30 or engine control unit 25. The data processing unit 510 can comprise a microcomputer.

The memory 520 also has a second memory portion 540 in which there is stored a program for exhaust purification in a motor vehicle. In an alternative embodiment the program for exhaust purification in a motor vehicle is stored in a separate non-volatile computer storage medium 550, such as a flash memory device. The program can be stored in executable form or in a compressed state.

Since in the following it is described that the data processing unit 510 performs a special function, it should be clear that the data processing unit 510 runs a special part of the program which is stored in the non-volatile recording medium 550.

The data processing unit 510 is adapted for communication with the memory 550 by means of a data bus 514. The data processing unit 510 is also adapted for communication with the memory 520 via a data bus 512. Furthermore, the data processing unit 510 is adapted for communication with the memory 560 by means of a data bus 511. The data processing unit 510 is also adapted for communication with a data port 590 via a data bus 515.

The methods described above can be performed by the data processing unit 510 running the program which is stored in memory 540 or the program which is stored in the non-volatile recording medium 550.

## Claims

1. A method for regenerating a diesel particulate filter (54) in the exhaust system of an internal combustion engine (15) driven vehicle equipped with an automatic mechanical transmission (20), said method comprising:
determining that the particulate load in the diesel particulate filter (54) exceeds a minimum predetermined threshold amount which is sufficiently high to warrant regeneration of the diesel particulate filter (210);
determining that current vehicle conditions exist which permit the establishment of appropriate conditions in the exhaust system to affect regeneration of the particulate loaded diesel particulate filter by appropriately configuring the automatic mechanical transmission (20, 215); **characterized in that** said method further comprises
assuring that immediate future driving conditions permit operation of the internal combustion engine (15) under sufficient load and at sufficiently slow speeds to maintain a sufficient regeneration temperature and exhaust flow in the exhaust system under the control of the automatic mechanical transmission (20) to affect regeneration of the filter (54, 220) by preventing implementation of a free-wheeling feature of the automatic mechanical transmission (20) during regeneration execution; and
executing successful regeneration of the filter by appropriately selecting gear in the automatic mechanical transmission (20) to cause the internal combustion engine (15) to run in a manner that establishes a sufficient regeneration temperature and exhaust flow in the exhaust system and that is maintained for a prescribed period of time (225).

2. The method as recited in claim 1, further comprising:
preventing disengagement of the automatic mechanical transmission (20) from the internal combustion engine (15) during regeneration execution.

3. The method as recited in claim 1, further comprising:
preventing configuration of the automatic mechanical transmission (20) during regeneration execution that significantly reduces the load on the internal combustion engine (15).

4. The method as recited in claim 1, further comprising:
preventing implementation of cruise control during regeneration execution.

5. The method as recited in claim 1, further comprising:
determining that the particulate load in the diesel particulate filter (54) exceeds a maximum predetermined threshold amount which requires immediate regeneration of the diesel particulate filter; and
executing immediate regeneration of the filter by appropriately configuring the automatic mechanical transmission (20) to cause the internal combustion engine (15) to run in a manner that establishes a sufficient regeneration temperature in the exhaust system for a prescribed period of time to accomplish said regeneration.

6. The method as recited in claim 1, further comprising:
determining that the particulate load in the diesel particulate filter (54) exceeds a maximum predetermined threshold amount which requires immediate regeneration of the diesel particulate filter; and
executing immediate regeneration of the filter by increasing fuel being supplied to at least one of the internal combustion engine (15) and the exhaust system and which establishes a sufficient regeneration temperature in the exhaust system for a prescribed period of time to accomplish said regeneration.

7. A system for regenerating a diesel particulate filter (54) in the exhaust system of an internal combustion engine (15) driven vehicle equipped with an automatic mechanical transmission (20), said system comprising:
a microprocessor based controller configured to process vehicle information and produce control instructions for at least the automatic mechanical transmission (20) of the vehicle, said controller being in control-communication with the automatic mechanical transmission (20) of the vehicle and programmed as follows: to determine when the particulate load in the diesel particulate filter (54) exceeds a minimum predetermined threshold amount which is sufficient to warrant regeneration of the diesel particulate filter; to determine when current vehicle conditions exist which permit the establishment of appropriate conditions in the exhaust system to affect regeneration of the particulate loaded filter by appropriately configuring the automatic mechanical transmission (20); **characterized in that** said system further comprises to assure that immediate future driving conditions permit operation of the internal combustion engine (15) under sufficient load and at sufficient low speeds to maintain a sufficient regeneration temperature and exhaust flow in the exhaust system under the control of the automatic mechanical transmission (20) to affect regeneration of the diesel particulate filter (54) by preventing implementation of a free-wheeling feature of the automatic mechanical transmission (20) during regeneration execution; and to execute successful regeneration of the diesel particulate filter by appropriately selecting gear in the automatic mechanical transmission (20) to cause the internal combustion engine (15) to run in a manner that establishes a sufficient regeneration temperature in the exhaust system and exhaust flow and that is maintained for a prescribed period of time.

8. The system as recited in claim 7, wherein said controller is further programmed to prevent configuration of the automatic mechanical transmission (20) during regeneration execution that significantly reduces the running speed of the internal combustion engine (15).

9. The system as recited in claim 7, wherein said controller is further programmed to prevent disengagement of the automatic mechanical transmission (20) from the internal combustion engine (15) during regeneration execution or to prevent configuration of the automatic mechanical transmission (20) during regeneration execution that significantly reduces the load on the internal combustion engine (15).

10. The system as recited in claim 7, wherein said controller is further programmed to prevent implementation of cruise control during regeneration execution.

11. The system as recited in claim 7, wherein said controller is further programmed to determine that the particulate load in the diesel particulate filter (54) exceeds a maximum predetermined threshold amount which requires immediate regeneration of the diesel particulate filter and to execute immediate regeneration of the diesel particulate filter by appropriately configuring the automatic mechanical transmission (20)to cause the internal combustion engine (15) to run in a manner that establishes a sufficient regeneration temperature in the exhaust system and exhaust flow for a prescribed period of time to accomplish said regeneration.

12. The system as recited in claim 7, wherein said controller is further programmed to determine that the particulate load in the diesel particulate filter (54) exceeds a maximum predetermined threshold amount which requires immediate regeneration of the diesel particulate filter and to execute immediate regeneration of the diesel particulate filter by increasing fuel being supplied to at least one of the internal combustion engine (15) and the exhaust system and which establishes a sufficient regeneration temperature in the exhaust system and exhaust flow for a prescribed period of time to accomplish said regeneration.

## Patentansprüche

1. Verfahren zur Regenerierung eines Dieselpartikelfilters (54) in dem Abgassystem eines von einem Verbrennungsmotor (15) angetriebenen Fahrzeugs, das mit einem automatischen mechanischen Getriebe (20) ausgestattet ist, wobei das Verfahren umfasst:
- das Bestimmen, dass die Partikelbeladung in dem Dieselpartikelfilter (54) eine minimale vorherbestimmte Schwellgröße übersteigt, die ausreichend hoch ist, um eine Regeneration des Dieselpartikelfilters (210) zu garantieren,
- das Bestimmen, dass momentane Fahrzeugbedingungen bestehen, die die Herstellung geeigneter Bedingungen in dem Abgassystem erlauben, um die Regenerierung des mit Partikeln beladenen Dieselpartikelfilters durch geeignete Konfigurierung des automatischen mechanischen Getriebes (20, 215) zu beeinflussen,
**dadurch gekennzeichnet, dass** das Verfahren außerdem umfasst:
- das Gewährleisten, dass Antriebsbedingungen in unmittelbarer Zukunft einen Betrieb des Verbrennungsmotor (15) unter ausreichender Last und bei ausreichend geringen Drehzahlen erlauben, um eine ausreichende Regenerierungstemperatur und Abgasströmung in dem Abgassystem aufrechtzuerhalten, unter Steuerung des automatischen mechanischen Getriebes (20) zur Beeinflussung der Regenerierung des Filters (54, 220) durch Verhindern einer Implementierung einer Freilaufeigenschaft des automatischen mechanischen Getriebes (20) während der Ausführung der Regenerierung, und
- das Ausführen einer erfolgreichen Regenerierung des Filters durch geeignete Wahl des Gangs in dem automatischen mechanischen Getriebe (20), um zu bewirken, dass der Verbrennungsmotor (15) in einer Weise läuft, die eine ausreichende Regenerierungstemperatur und Abgasströmung in dem Abgassystem herstellt, und die für einen vorherbestimmten Zeitabschnitt (225) aufrechterhalten wird.

2. Verfahren nach Anspruch 1, außerdem umfassend:
- das Verhindern des Ausrückens des automatischen mechanischen Getriebes (20) von dem Verbrennungsmotor (15) während der Ausführung der Regenerierung.

3. Verfahren nach Anspruch 1, außerdem umfassend:
- das Verhindern der Konfiguration des automatischen mechanischen Getriebes (20) während der Ausführung der Regenerierung, die die Last an dem Verbrennungsmotor (15) merklich reduziert.

4. Verfahren nach Anspruch 1, außerdem umfassend:
- das Verhindern der Implementierung einer Tempomatsteuerung während der Ausführung der Regenerierung.

5. Verfahren nach Anspruch 1, außerdem umfassend:
- das Bestimmen, dass die Partikelbeladung in dem Dieselpartikelfilter (54) eine maximale vorherbestimmte Schwellgröße überschreitet, die eine sofortige Regenerierung des Dieselpartikelfilters erfordert, und
- das Ausführen einer sofortigen Regenerierung des Filters durch geeignete Konfigurierung des automatischen mechanischen Getriebes (20), um zu bewirken, dass der Verbrennungsmotor (15) in einer Weise läuft, die eine ausreichende Regenerierungstemperatur in dem Abgassystem für einen vorherbestimmten Zeitabschnitt herstellt, um die Regenerierung durchzuführen.

6. Verfahren nach Anspruch 1, außerdem umfassend:
- das Bestimmen, dass die Partikelbeladung in dem Dieselpartikelfilter (54) eine maximale vorherbestimmte Schwellgröße überschreitet, die eine sofortige Regenerierung des Dieselpartikelfilters erfordert, und
- das Ausführen einer sofortigen Regenerierung des Filters durch Erhöhung des zugeführten Kraftstoffs zu wenigstens einem von dem Verbrennungsmotor (15) und dem Abgassystem, wodurch eine ausreichende Regenerierungstemperatur in dem Abgassystem für einen vorherbestimmten Zeitabschnitt zur Durchführung der Regenerierung hergestellt wird.

7. System zur Regenerierung eines Dieselpartikelfilters (54) in dem Abgassystem eines von einem Verbrennungsmotor (15) angetriebenen Fahrzeugs, das mit einem automatischen mechanischen Getriebe (20) ausgestattet ist, wobei das System umfasst:
- eine mikroprozessorbasierte Steuereinrichtung, die so konfiguriert ist, dass sie Fahrzeuginformation verarbeitet und Steuerinstruktionen für wenigstens das automatische mechanische Getriebe (20) des Fahrzeugs erzeugt, wobei die Steuereinrichtung in Steuerverbindung mit dem automatischen mechanischen Getriebe (20) des Fahrzeugs steht und programmiert ist wie folgt: dass sie bestimmt, wann die Partikelbeladung in dem Dieselpartikelfilter (54) eine minimale vorherbestimmte Schwellgröße übersteigt, die ausreichend hoch ist, um eine Regeneration des Dieselpartikelfilters zu garantieren, dass sie bestimmt, wann momentane Fahrzeugbedingungen bestehen, die die Herstellung geeigneter Bedingungen in dem Abgassystem erlauben, um die Regenerierung des mit Partikeln beladenen Dieselpartikelfilters durch geeignete Konfigurierung des automatischen mechanischen Getriebes (20, 215) zu beeinflussen,
**dadurch gekennzeichnet, dass** das System außerdem umfasst:
- dass es unter Steuerung des automatischen mechanischen Getriebes (20) zur Beeinflussung der Regenerierung des Dieselpartikelfilters (54, 220) durch Verhindern einer Implementierung einer Freilaufeigenschaft des automatischen mechanischen Getriebes (20) während der Ausführung der Regenerierung gewährleistet, dass Antriebsbedingungen in unmittelbarer Zukunft einen Betrieb des Verbrennungsmotor (15) unter ausreichender Last und bei ausreichenden geringen Drehzahlen erlauben, um eine ausreichende Regenerierungstemperatur und Abgasströmung in dem Abgassystem aufrechtzuerhalten, und dass es eine erfolgreiche Regenerierung des Filters durch geeignete Wahl des Gangs in dem automatischen mechanischen Getriebe (20) ausführt, um zu bewirken, dass der Verbrennungsmotor (15) in einer Weise läuft, die eine ausreichende Regenerierungstemperatur in dem Abgassystem und Abgasströmung herstellt, und die für einen vorherbestimmten Zeitabschnitt aufrechterhalten wird.

8. System nach Anspruch 7, bei dem die Steuereinrichtung außerdem so programmiert ist, dass sie die Konfiguration des automatischen mechanischen Getriebes (20) während der Ausführung der Regenerierung verhindert, die die Laufdrehzahl des Verbrennungsmotors (15) merklich reduziert.

9. System nach Anspruch 7, wobei die Steuereinrichtung außerdem so programmiert ist, dass sie ein Ausrücken des automatischen mechanischen Getriebes (20) von dem Verbrennungsmotor (15) während der Ausführung der Regenerierung verhindert, oder dass sie eine Konfiguration des automatischen mechanischen Getriebes (20) während der Ausführung der Regenerierung verhindert, die die Last an dem Verbrennungsmotor (15) deutlich reduziert.

10. System nach Anspruch 7, wobei die Steuereinrichtung außerdem so programmiert ist, dass sie eine Implementierung einer Tempomatsteuerung während der Ausführung der Regenerierung verhindert.

11. System nach Anspruch 7, bei dem die Steuereinrichtung außerdem so programmiert ist, dass sie bestimmt, dass die Partikelbeladung in dem Dieselpartikelfilter (54) eine maximale vorherbestimmte Schwellgröße überschreitet, die eine sofortige Regenerierung des Dieselpartikelfilters erfordert, und dass sie die sofortige Regenerierung des Dieselpartikelfilters durch geeignete Konfigurierung des automatischen mechanischen Getriebes (20) ausführt, um zu bewirken, dass der Verbrennungsmotor (15) in einer Weise läuft, die eine ausreichende Regenerierungstemperatur in dem Abgassystem und Abgasströmung für einen vorherbestimmten Zeitabschnitt herstellt, um die Regenerierung durchzuführen.

12. System nach Anspruch 7, bei dem die Steuereinrichtung außerdem so programmiert ist, dass sie bestimmt, dass die Partikelbeladung in dem Dieselpartikelfilter (54) eine maximale vorherbestimmte Schwellgröße überschreitet, die eine sofortige Regenerierung des Dieselpartikelfilters erfordert, und dass sie die sofortige Regenerierung des Dieselpartikelfilters durch Erhöhung des zugeführten Kraftstoffs zu wenigstens einem von dem Verbrennungsmotor (15) und dem Abgassystem ausführt, wodurch eine ausreichende Regenerierungstemperatur in dem Abgassystem und Abgasströmung für einen vorherbestimmten Zeitabschnitt zur Durchführung der Regenerierung hergestellt wird.

## Revendications

1. Procédé de régénération d'un filtre à particules diesel (54) dans le système d'échappement d'un véhicule entraîné par moteur à combustion interne (15) équipé d'une transmission mécanique automatique (20), ledit procédé comprenant le fait :
de déterminer que la charge de particules dans le filtre à particules diesel (54) dépasse une quantité seuil prédéterminée minimale qui est suffisamment élevée pour justifier une régénération du filtre à particules diesel (210) ;
de déterminer que des conditions de véhicule actuelles existent qui permettent l'établissement de conditions appropriées dans le système d'échappement pour affecter la régénération du filtre à particules diesel chargé en particules en configurant de manière appropriée la transmission mécanique automatique (20, 215) ;
**caractérisé en ce que** ledit procédé comprend en outre le fait
de s'assurer que des conditions de conduite du futur immédiat permettent le fonctionnement du moteur à combustion interne (15) sous une charge suffisante et à une vitesse suffisamment lente pour maintenir une température de régénération suffisante et un flux d'échappement dans le système d'échappement sous la commande de la transmission mécanique automatique (20) pour affecter la régénération du filtre (54, 220) en empêchant la mise en oeuvre d'une caractéristique de roue libre de la transmission mécanique automatique (20) au cours de l'exécution de régénération ; et
d'exécuter une régénération réussie du filtre en sélectionnant de manière appropriée un engrenage dans la transmission mécanique automatique (20) pour amener le moteur à combustion interne (15) à fonctionner d'une manière qui établit une température de régénération suffisante et un flux d'échappement dans le système d'échappement et qui est maintenue pendant une période de temps prescrite (225).

2. Procédé selon la revendication 1, comprenant en outre le fait :
d'empêcher le désengagement de la transmission mécanique automatique (20) à partir du moteur à combustion interne (15) au cours de l'exécution de régénération.

3. Procédé selon la revendication 1, comprenant en outre le fait :
d'empêcher la configuration de la transmission mécanique automatique (20) au cours de l'exécution de régénération qui permet de réduire de manière significative la charge sur le moteur à combustion interne (15).

4. Procédé selon la revendication 1, comprenant en outre le fait :
d'empêcher la mise en oeuvre de régulation de vitesse au cours de l'exécution de régénération.

5. Procédé selon la revendication 1, comprenant en outre le fait :
de déterminer que la charge de particules dans le filtre à particules diesel (54) dépasse une quantité seuil prédéterminée maximale qui nécessite une régénération immédiate du filtre à particules diesel ; et
d'exécuter une régénération immédiate du filtre en configurant de manière appropriée la transmission mécanique automatique (20) pour amener le moteur à combustion interne (15) à fonctionner d'une manière qui établit une température de régénération suffisante dans le système d'échappement pendant une période de temps prescrite pour accomplir ladite régénération.

6. Procédé selon la revendication 1, comprenant en outre le fait :
de déterminer que la charge de particules dans le filtre à particules diesel (54) dépasse une quantité seuil prédéterminée maximale qui nécessite une régénération immédiate du filtre à particules diesel ; et
d'exécuter une régénération immédiate du filtre en augmentant le carburant qui est alimenté à au moins l'un parmi le moteur à combustion interne (15) et le système d'échappement et qui établit une température de régénération suffisante dans le système d'échappement pendant une période prescrite pour accomplir ladite régénération.

7. Système de régénération d'un filtre à particules diesel (54) dans le système d'échappement d'un véhicule entraîné par moteur à combustion interne (15) équipé d'une transmission mécanique automatique (20), ledit système comprenant :
une unité de commande à base de microprocesseur configurée pour traiter des informations de véhicule et pour produire des instructions de commande pour au moins la transmission mécanique automatique (20) du véhicule, ladite unité de commande étant en communication de commande avec la transmission mécanique automatique (20) du véhicule et étant programmée comme suit : pour déterminer le moment où la charge de particules dans le filtre à particules diesel (54) dépasse une quantité seuil prédéterminée minimale qui est suffisante pour justifier une régénération du filtre à particules diesel ; pour déterminer le moment où des conditions de véhicule actuelles existent qui permettent l'établissement de conditions appropriées dans le système d'échappement pour affecter la régénération du filtre chargé en particules en configurant de manière appropriée la transmission mécanique automatique (20) ; **caractérisé en ce que** ledit système comprend en outre le fait de s'assurer que des conditions de conduite du futur immédiat permettent le fonctionnement du moteur à combustion interne (15) sous une charge suffisante et à une vitesse suffisamment lente pour maintenir une température de régénération suffisante et un flux d'échappement dans le système d'échappement sous la commande de la transmission mécanique automatique (20) pour affecter la régénération du filtre à particules diesel (54) en empêchant la mise en oeuvre d'une caractéristique de roue libre de la transmission mécanique automatique (20) au cours de l'exécution de régénération ; et d'exécuter une régénération réussie du filtre à particules diesel en sélectionnant de manière appropriée un engrenage dans la transmission mécanique automatique (20) pour amener le moteur à combustion interne (15) fonctionner d'une manière qui établit une température de régénération suffisante dans le système d'échappement et un flux d'échappement et qui est maintenue pendant une période de temps prescrite.

8. Système selon la revendication 7, dans lequel ladite unité de commande est en outre programmée pour empêcher la configuration de la transmission mécanique automatique (20) au cours de l'exécution de régénération qui permet de réduire de manière significative la vitesse de fonctionnement du moteur à combustion interne (15).

9. Système selon la revendication 7, dans lequel ladite unité de commande est en outre programmée pour empêcher le désengagement de la transmission mécanique automatique (20) à partir du moteur à combustion interne (15) au cours de l'exécution de régénération ou pour empêcher la configuration de la transmission mécanique automatique (20) au cours de l'exécution de régénération qui permet de réduire de manière significative la charge sur le moteur à combustion interne (15).

10. Système selon la revendication 7, dans lequel ladite unité de commande est en outre programmée pour empêcher la mise en oeuvre de régulation de vitesse au cours de l'exécution de régénération.

11. Système selon la revendication 7, dans lequel ladite unité de commande est en outre programmée pour déterminer que la charge de particules dans le filtre à particules diesel (54) dépasse une quantité seuil prédéterminée maximale qui nécessite une régénération immédiate du filtre à particules diesel et pour exécuter la régénération immédiate du filtre à particules diesel en configurant de manière appropriée la transmission mécanique automatique (20) pour amener le moteur à combustion interne (15) fonctionner d'une manière qui établit une température de régénération suffisante dans le système d'échappement et un flux d'échappement pendant une période de temps prescrite pour accomplir ladite régénération.

12. Système selon la revendication 7, dans lequel ladite unité de commande est en outre programmée pour déterminer que la charge de particules dans le filtre à particules diesel (54) dépasse une quantité seuil prédéterminée maximale qui nécessite une régénération immédiate du filtre à particules diesel et pour exécuter la régénération immédiate du filtre à particules diesel en augmentant le carburant qui est alimenté à au moins l'un parmi le moteur à combustion interne (15) et le système d'échappement et qui établit une température de régénération suffisante dans le système d'échappement et un flux d'échappement pendant une période de temps prescrite pour accomplir ladite régénération.
